# EUROPEAN PATENT APPLICATION

(11) **EP 4 357 629 A1**
(43) Date of publication of application: **24.04.2024**
(21) Application number: 22831261.7
(22) Date of filing: 22.03.2022
(51) Int. Cl.: F16C 11/04, G06F 1/16, H04M 1/02

(54) **ROTATING SHAFT STRUCTURE AND ELECTRONIC DEVICE**

(30) Priority: 30.06.2021 CN 202110742765
(71) Applicant: ZTE Corporation, Shenzhen, Guangdong 518057 (CN)
(72) Inventor: XU, Xianghui, Shenzhen, Guangdong 518057 (CN); LIANG, Yanjun, Shenzhen, Guangdong 518057 (CN); YAO, Shibin, Shenzhen, Guangdong 518057 (CN); LIU, Yinghui, Shenzhen, Guangdong 518057 (CN)
(74) Representative: Novagraaf Technologies
(86) International application number: PCT/CN2022/082304
(87) International publication number: WO 2023/273430

(57) **Abstract**

A rotating shaft structure, which includes: a rotor (13), a stator (12), and an elastic member (14); a cam surface is provided on each of mating surfaces of both the rotor (13) and the stator (12); the elastic member (14) is connected to an opposite end of the cam surface of the rotor (13); wherein in an overturning process of the rotor (13) or the stator (12), the cam surfaces of the two constantly change contact positions so as to change an elastic force of the elastic member (14), so that the rotating shaft structure generates a damping torque or an assist torque; or the elastic member (14) is connected to an opposite end of the cam surface of the stator (12); wherein in an overturning process of the rotor (13) or the stator (12), the cam surfaces of the two constantly change contact positions so as to change an elastic force of the elastic member (14), so that the rotating shaft structure generates a damping torque or an assist torque. By the rotating shaft structure, the problems of a complex rotating shaft structure and difficult assembly and maintenance in the related art can be solved; and the ease of use of operation of the rotating shaft structure can be improved, achieving the effects of simplifying the rotating shaft structure, reducing the difficulty of assembly and maintenance, improving the operability, and reducing manufacturing costs. Also provided is an electronic device.

## Description

### Cross-Reference to Related Application

The present disclosure is based on Chinese patent application No. CN 202110742765.2 filed on June 30, 2021 and entitled "Rotating Shaft Structure and Electronic Device", and claims priority to the patent application, the disclosure of which is incorporated herein by reference in its entirety.

### Technical Field

Embodiments of the present disclosure relate to the machinery field, and in particular to a rotating shaft structure and an electronic device.

### Background

A rotating shaft is a structure designed to make an overturning motion around a specific rotation axis. In the field of communications or the field of electronic devices, particularly in the field of terminal devices, there are many rotating shaft structures, and a relatively typical rotating shaft structure is a rotating shaft of a notebook computer; however, the structure of the existing rotating shaft structure is relatively complex, and the assembly and maintenance thereof are difficult.

### Summary

Embodiments of the present disclosure provide a rotating shaft structure and an electronic device, so as to at least solve the problems of a complex rotating shaft structure and difficult assembly and maintenance in the related art, while improving the operability of the rotating shaft structure.

According to some embodiments of the present disclosure, provided is a rotating shaft structure, comprising: a rotor, a stator and an elastic member; a cam surface is provided on each of mating surfaces of both the rotor and the stator; the elastic member is connected to an opposite end of the cam surface of the rotor; wherein in an overturning process of the rotor or the stator, the cam surfaces of the two constantly change contact positions so as to change an elastic force of the elastic member, so that the rotating shaft structure generates a damping torque or an assist torque; or the elastic member is connected to an opposite end of the cam surface of the stator; wherein in an overturning process of the rotor or the stator, the cam surfaces of the two constantly change contact positions so as to change an elastic force of the elastic member, so that the rotating shaft structure generates a damping torque or an assist torque.

According to some other embodiments of the present disclosure, provided is an electronic device, comprising: a first body; a second body; and a rotating shaft structure, for connecting the first body and the second body; the rotating shaft structure comprises: a rotor, a stator and an elastic member; a cam surface is provided on each of mating surfaces of both the rotor and the stator; the elastic member is connected to an opposite end of the cam surface of the rotor; wherein in an overturning process of the rotor or the stator, the cam surfaces of the two constantly change contact positions so as to change an elastic force of the elastic member, so that the rotating shaft structure generates a damping torque or an assist torque; or the elastic member is connected to an opposite end of the cam surface of the stator; wherein in an overturning process of the rotor or the stator, the cam surfaces of the two constantly change contact positions so as to change an elastic force of the elastic member, so that the rotating shaft structure generates a damping torque or an assist torque.

By the present disclosure, in an overturning process of the rotor or the stator, the cam surfaces of the two constantly change contact positions so as to change an elastic force of the elastic member, so that the rotating shaft structure generates a damping torque or an assist torque, which can provide damping and assist effects for a user to turn over the rotating shaft structure. Therefore, the problems of a complex rotating shaft structure and difficult assembly and maintenance in the related art can be solved, achieving the effects of simplifying the rotating shaft structure, reducing the difficulty of assembly and maintenance, improving the operability, and reducing manufacturing costs.

### Brief Description of the Drawings

Fig. 1 is a schematic diagram of different states of a rotating shaft of an electronic device according to embodiments of the present disclosure;
Fig. 2 is a schematic diagram of a coiling damping rotating shaft structure according to embodiments of the present disclosure;
Fig. 3 is a schematic diagram of a friction damping rotating shaft structure according to embodiments of the present disclosure;
Fig. 4 is a schematic diagram of a gear engagement damping rotating shaft structure according to embodiments of the present disclosure;
Fig. 5 is a schematic diagram of a rotating shaft structure according to embodiments of the present disclosure;
Fig. 6 is a schematic diagram of another rotating shaft structure according to embodiments of the present disclosure;
Fig. 7 is a schematic diagram of still another rotating shaft structure according to embodiments of the present disclosure;
Fig. 8 is a schematic diagram of a rotating shaft structure opening 0-45 degrees according to embodiments of the present disclosure;
Fig. 9 is a schematic diagram of a rotating shaft structure opening 45-90 degrees according to embodiments of the present disclosure;
Fig. 10 is a schematic diagram of a rotating shaft structure closing 0-45 degrees according to embodiments of the present disclosure;
Fig. 11 is a schematic diagram of a rotating shaft structure closing 45-90 degrees according to embodiments of the present disclosure;
Fig. 12 is a schematic diagram of another rotating shaft structure according to embodiments of the present disclosure;
Fig. 13 is a schematic diagram of still another rotating shaft structure according to embodiments of the present disclosure;
Fig. 14 is a schematic diagram of yet another rotating shaft structure according to embodiments of the present disclosure;
Fig. 15 is a schematic diagram of another rotating shaft structure according to embodiments of the present disclosure;
Fig. 16 is a schematic diagram of still another rotating shaft structure according to embodiments of the present disclosure;
Fig. 17 is a schematic diagram of yet another rotating shaft structure according to embodiments of the present disclosure;
Fig. 18 is a schematic diagram of another rotating shaft structure according to embodiments of the present disclosure;
Fig. 19 is a schematic diagram of another rotating shaft structure according to embodiments of the present disclosure;
Fig. 20 is a schematic diagram of another rotating shaft structure according to embodiments of the present disclosure;
Fig. 21 is a schematic diagram of another rotating shaft structure according to embodiments of the present disclosure;
Fig. 22 is a schematic diagram of another rotating shaft structure according to embodiments of the present disclosure;
Fig. 23 is a schematic diagram of another rotating shaft structure according to embodiments of the present disclosure;
Fig. 24 is a schematic diagram of another rotating shaft structure according to embodiments of the present disclosure;
Fig. 25 is a schematic diagram of another rotating shaft structure according to embodiments of the present disclosure;
Fig. 26 is a schematic diagram of another rotating shaft structure according to embodiments of the present disclosure;
Fig. 27 is a schematic diagram of another rotating shaft structure according to embodiments of the present disclosure;
Fig. 28 is a schematic diagram of another rotating shaft structure according to embodiments of the present disclosure;
Fig. 29 is a schematic diagram of still another rotating shaft structure according to embodiments of the present disclosure;
Fig. 30 is a schematic diagram of yet another rotating shaft structure according to embodiments of the present disclosure;
Fig. 31 is a schematic diagram of another rotating shaft structure according to embodiments of the present disclosure;
Fig. 32 is a schematic diagram of still another rotating shaft structure according to embodiments of the present disclosure;
Fig. 33 is a schematic diagram of yet another rotating shaft structure according to embodiments of the present disclosure;
Fig. 34 is a schematic diagram of another rotating shaft structure according to embodiments of the present disclosure;
Fig. 35 is a schematic diagram of still another rotating shaft structure according to embodiments of the present disclosure;
Fig. 36 is a schematic diagram of yet another rotating shaft structure according to embodiments of the present disclosure;
Fig. 37 is a schematic diagram of another rotating shaft structure according to embodiments of the present disclosure; and
Fig. 38 is a schematic diagram of still another rotating shaft structure according to embodiments of the present disclosure.

### Detailed Description of the Embodiments

Hereinafter, embodiments of the present disclosure are described in detail with reference to the accompanying drawings and in conjunction with the embodiments.

It should be noted that terms "first", "second" etc. in the description, claims, and accompanying drawings of the present disclosure are used to distinguish similar objects, and are not necessarily used to describe a specific sequence or order.

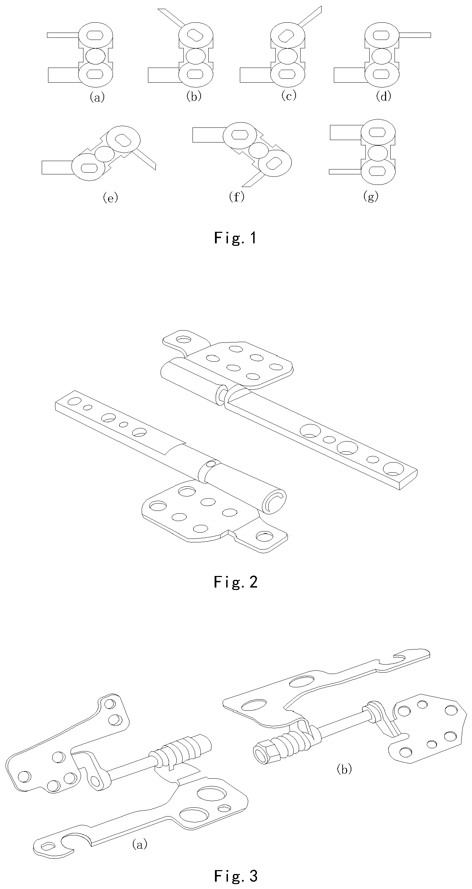

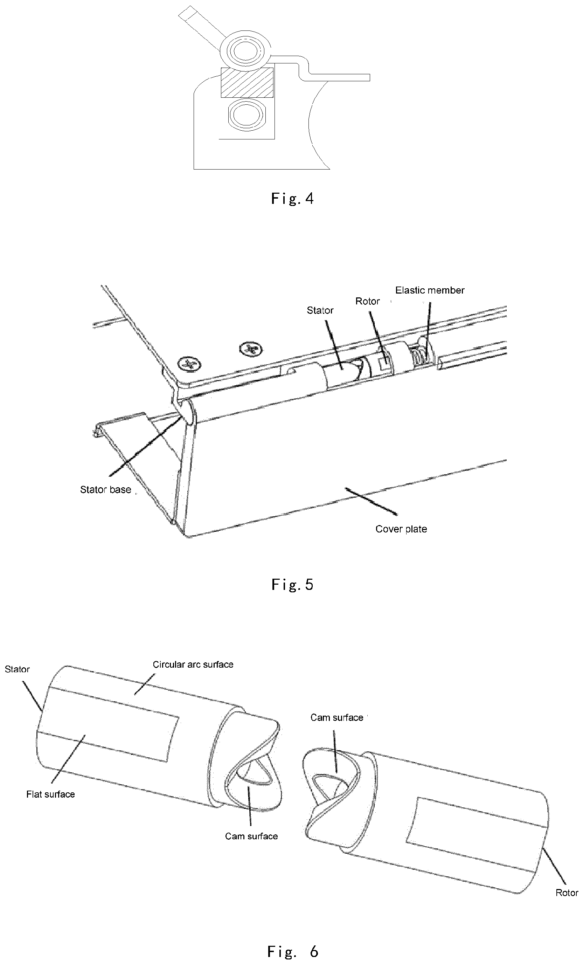

In the related art, a rotating shaft is a structure designed to make an overturning motion around a specific rotation shaft. In the field of communications or the field of electronic devices, particularly in the field of terminal devices, there are many rotating shaft structures, and a relatively typical rotating shaft structure is a rotating shaft of a notebook computer. As shown in Fig. 1, (a) to (g) in Fig. 1 are schematic diagrams of assemblies of a notebook computer at different positions. According to different implementation principles of a rotating shaft structure, the rotating shaft structure can be divided into: (1) a coiling damping rotating shaft; (2) a gear engagement damping rotating shaft; and (3) a friction damping rotating shaft. All of the three can provide constant value damping, and have a certain damping feel during overturning. As shown in Fig. 2, a coiling damping rotating shaft structure has a simple structure, and the implementation principle thereof is to generate damping through interference fit friction between two parts, which has high requirements for machining materials and precision of tolerance of fit; and in order to achieve suitable damping and a relatively high service life, the structure needs to be constantly adjusted. As shown in Fig. 3, both (a) and (b) in Fig. 3 are friction damping rotating shafts, which generate an elastic force by compressing of an elastic element and push two moving components to generate constant damping on contact surfaces. As shown in Fig. 4, Fig. 4 shows a gear engagement damping rotating shaft, which generates a friction force by mutual engagement of teeth of two components, thereby generating a damping torque; the structure thereof is complex, the number of parts is large and the cost is high, and a higher requirement is also proposed for assembling. With the increasing demands of users for the ease of use of engineering operation of communication products or electronic devices, particularly for moving components that need to be frequently maintained, customer requirements cannot be satisfied as the rotating shaft structure only provides constant damping.

Embodiments of the present disclosure provide a rotating shaft structure. As shown in Fig. 5, the rotating shaft structure comprises: a rotor, a stator and an elastic member; as shown in Fig. 6, a cam surface is provided on each of mating surfaces of both the rotor and the stator; as shown in Fig. 5, the elastic member is connected to an opposite end of the cam surface of the rotor; wherein in an overturning process of the rotor or the stator, the cam surfaces of the two constantly change contact positions so as to change an elastic force of the elastic member, so that the rotating shaft structure generates a damping torque or an assist torque.

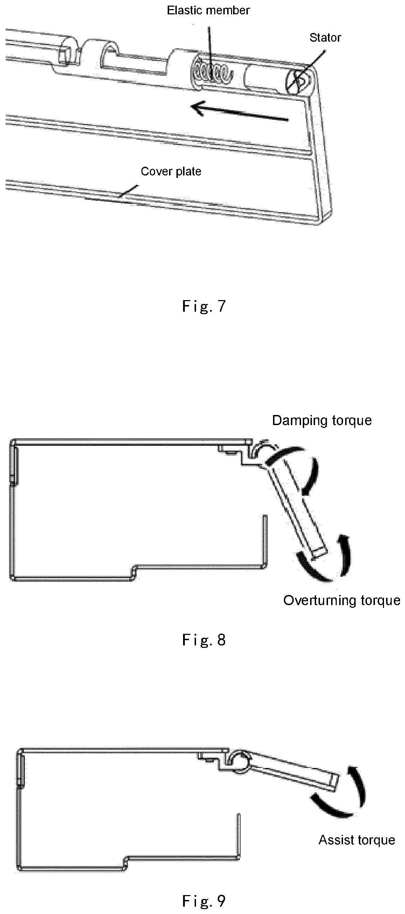

Herein, as shown in Fig. 7, the elastic member may be a spring or various elements capable of providing an elastic force, and the elastic member may be fixedly connected to the rotor, and may also be in contact connection with the rotor, which is not limited in some embodiments of the present disclosure.

In one or more embodiments, the elastic member is connected to an opposite end of the cam surface of the stator; wherein in an overturning process of the rotor or the stator, the cam surfaces of the two constantly change contact positions so as to change an elastic force of the elastic member, so that the rotating shaft structure generates a damping torque or an assist torque. That is to say, the elastic member may be provided not only on the rotor side, but also on the stator side.

By the present disclosure, in an overturning process of the rotor or the stator, the cam surfaces of the two constantly change contact positions so as to change an elastic force of the elastic member, so that the rotating shaft structure generates a damping torque or an assist torque, which can provide damping and assist effects for a user to turn over the rotating shaft structure. Therefore, the problems of a complex rotating shaft structure and difficult assembly and maintenance in the related art can be solved, achieving the effects of simplifying the rotating shaft structure, reducing the difficulty of assembly and maintenance, improving the operability of a user turning over a rotating shaft, and reducing manufacturing costs.

In one or more embodiments, a first end of the rotor is connected to the elastic member;
a second end of the rotor is in rotational fit connection with a first end of the stator; wherein an end face of the second end of the rotor is a first cam surface, and an end face of a second end of the stator is a second cam surface, and the first cam surface matches the second cam surface;
when a radial rotation angle of the rotor changes from a first preset angle to a second preset angle, a contact area between the first cam surface and the second cam surface changes from a maximum value to a minimum value, the elastic force of the elastic member increases from a first elastic force to a second elastic force, and the rotor is subjected to an overturning resistance force; and
when the radial rotation angle of the rotor changes from the second preset angle to a third preset angle, a contact area between the first cam surface and the second cam surface changes from the minimum value to the maximum value, the first end of the rotor bears the elastic force of the elastic member and the elastic force reduces from the second elastic force to the second elastic force, and the rotor is subjected to an overturning assist force.

In one or more embodiments, a first end of the stator is connected to the elastic member;
a second end of the stator is in rotational fit connection with the first end of the stator; wherein an end face of the second end of the stator is a first cam surface, and an end face of the second end of the stator is a second cam surface, and the first cam surface matches the second cam surface;
when a radial rotation angle of the stator changes from a first preset angle to a second preset angle, a contact area between the first cam surface and the second cam surface changes from a maximum value to a minimum value, the elastic force of the elastic member increases from a first elastic force to a second elastic force, and the statoris subjected to an overturning resistance force; and
when the radial rotation angle of the stator changes from the second preset angle to a third preset angle, a contact area between the first cam surface and the second cam surface changes from the minimum value to the maximum value, the first end of the stator bears the elastic force of the elastic member and the elastic force reduces from the second elastic force to the second elastic force, and the stator is subjected to an overturning assist force.

In one or more embodiments, a second end of the stator is connected to the elastic member.

In one or more embodiments, a second end of the rotor is connected to the elastic member.

In one or more embodiments, a second end of the stator is fixedly connected to the elastic member, and the stator is sleeved on the rotor by an external movable sleeve.

In one or more embodiments, a second end of the stator is fixedly connected to the elastic member, and the stator is sleeved on the rotor by an external movable sleeve.

In one or more embodiments, the number of both the rotor and the elastic member is two;
one end of each of the two rotors is in fit connection with two ends of the stator;
a cam surface is provided on each of mating surfaces of the three, i.e. the two rotors and the stator;
the two elastic members are respectively connected to opposite ends of the cam surfaces of the two rotors; wherein in an overturning process of the rotors or the stator, the cam surfaces of the three constantly change contact positions so as to change elastic forces of the elastic members, so that the rotating shaft structure generates a damping torque or an assist torque.

Embodiments of the present disclosure further provide an electronic device, comprising: a first body; a second body;
and a rotating shaft structure, for connecting the first body and the second body;
the rotating shaft structure comprises: a rotor, a stator and an elastic member;
a cam surface is provided on each of mating surfaces of both the rotor and the stator;
the elastic member is connected to an opposite end of the cam surface of the rotor; wherein in an overturning process of the rotor or the stator, the cam surfaces of the two constantly change contact positions so as to change an elastic force of the elastic member, so that the rotating shaft structure generates a damping torque or an assist torque. The electronic device herein may include, but is not limited to, an electronic device that needs to be opened in a rotating manner, such as a notebook computer, which is not limited herein.

In some embodiments, the elastic member is connected to an opposite end of the cam surface of the stator; wherein in an overturning process of the rotor or the stator, the cam surfaces of the two constantly change contact positions so as to change an elastic force of the elastic member, so that the rotating shaft structure generates a damping torque or an assist torque.

In one or more embodiments, the first body is fixedly connected to the rotor, and the second body is fixedly connected to the stator; or
the first body is fixedly connected to the stator, and the second body is fixedly connected to the rotor.

In embodiments of the present disclosure, by relative movement of the stator and the rotor, the first body and the second body of the electronic device can be separated; and by the change of a torque generated when mating surfaces of the stator and the rotor interact, damping and assist effects are provided when the rotating shaft structure is turned over.

In some embodiments, an overturning process of the rotating shaft structure (if turning over 90 degrees, turning over 45 degrees being an intermediate transition state) is as follows:
as shown in Fig. 8, during opening, when an overturning angle is at 0- 45 degrees, the rotating shaft structure provides a damping torque; when opening to 45 degrees, it is a critical point, the rotor does not provide an overturning torque, and crosses the critical point; and as shown in Fig. 9, at 45-90 degrees, the rotating shaft provides an assist torque, a bounce feeling is provided, improving the user experience.

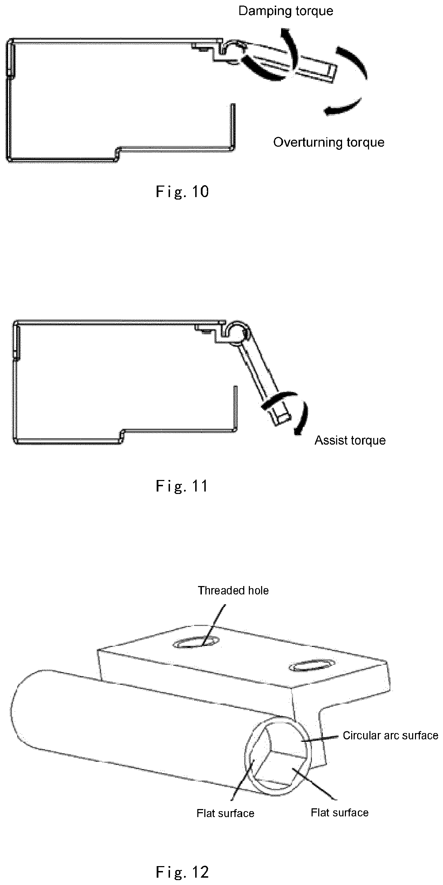

During closing, as shown in Fig. 10, at 90-45 degrees, a damping torque is provided, and when closing to 45 degrees, it is a critical point, and an overturning torque is not provided; and as shown in Fig. 11, after crossing the critical point, when the angle is 45-0 degrees, an assist torque is provided, an attraction feeling is provided, improving the user experience.

Compared with a constant value damping rotating shaft technology in the related art, the rotating shaft structure also has an assist function while providing damping, thereby improving user operation experience; and key parts (the rotor and the stator) can be made of, but not limited to, wear-resistant materials, and have good damping retention, high reliability, low manufacturing cost of mold opening, simple structure and easy assembly.

In one or more embodiments, the rotating shaft structure can be applied to different electronic devices; and when the electronic device is opened and closed, a left-side rotating shaft and a right-side rotating shaft need to work at the same time, that is to say, the electronic device may be provided with two rotating shaft structures. As the left-side and right-side rotating shaft structures are similar, hereinafter, a rotating shaft structure at one side is taken as an example. As shown in Fig. 5, the electronic device comprises: a stator base, a stator, a rotor, an elastic member and a cover plate; the stator and the rotor can be made of wear-resistant materials, and the stator base and the cover plate are of metal structures.

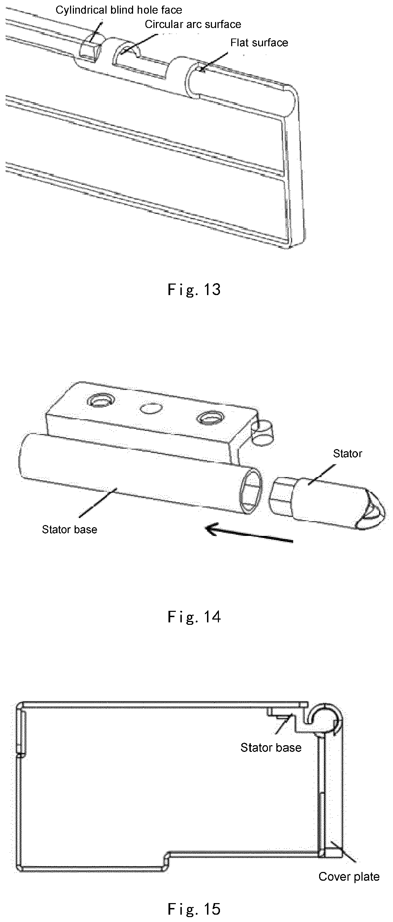

In conjunction with Figs. 6 and 12, the tail part of the stator is provided with a cylindrical surface and a flat surface which cooperate with a circular arc surface and a flat surface of the stator base, to achieve radial fixation between the stator and the stator base; the flat surface of the stator abuts against the flat surface of the stator base, to achieve axial fixation of the stator; and the stator base is fixed to other structural members by two threaded holes. As shown in Fig. 13, the rotor is respectively fitted with a circular arc surface and a flat surface of the cover plate via the cylindrical surface and the flat surface; the elastic member is mounted between a flat surface at the tail part of the rotor and a cylindrical blind hole face of the cover plate; and the flat surface of the rotor fits the flat surface of the cover plate, to achieve synchronous rotation of the rotor and the cover plate.

Assembly of the electronic device: as shown in Fig. 14, the stator is first installed in the stator base, and then the elastic member is installed at the bottom of a blind hole of the cover plate, so that the elastic member abuts against the blind hole face of the cover plate. As shown in Fig. 7, then the rotor is installed in the cover plate, and then the whole cover plate is fitted with the head part of the stator; at this time, the elastic member is compressed, and then the installation at the other side is completed, so as to complete the installation of the electronic device. Regarding an initial state after the installation, the cover plate is in a closed state, and the elastic members at the two sides are both in a compressed state.

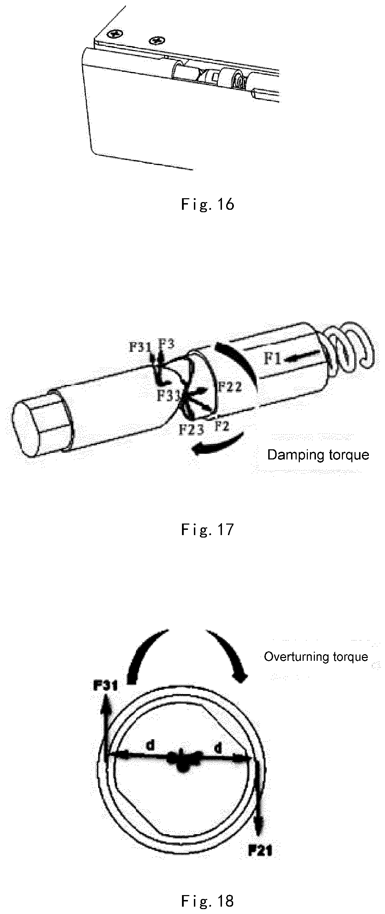

After the electronic device is initially assembled, in conjunction with Figs. 15 and 16, the initial mating position between the cam surfaces of the stator and the rotor is compressed under the action of the elastic force of the elastic member; and the cover plate is in a closed state under the action of a damping torque. The state and force analysis of the cover plate are as follows:
In conjunction with Figs. 17 and 18, the rotor is subjected to three forces, i.e. the elastic force F1 of the elastic member, and forces F2 and F3 applied by the stator to the rotor; each of F2 and F3 is decomposed into an axial force and a radial force; axial forces F22+F32 are balanced with F1, and tangential forces F31 and F21 generate a damping torque, so as to prevent the cover plate from being opened and enable the cover plate to be in a closed state; and if the cover plate is opened at this time, a human hand needs to overcome the damping torque.

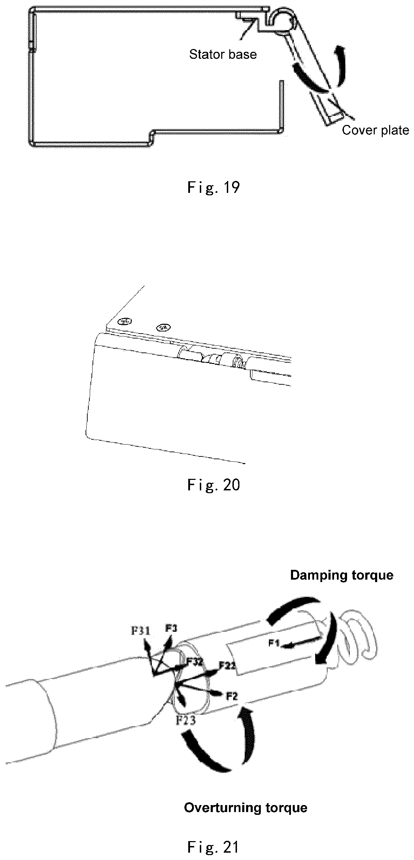

In conjunction with Figs. 19 and 20, when the cover plate is opened, at 0-45, the cover plate drives the rotor to rotate; the stator does not move due to the constraint of the stator base; the two cam surfaces and contact positions change, the rotor moves right and continuously compresses the elastic member; and the elastic force also increases accordingly; and the rotor generates a damping torque under the action of the elastic force, so as to resist the human hand force and provide a damping feeling.

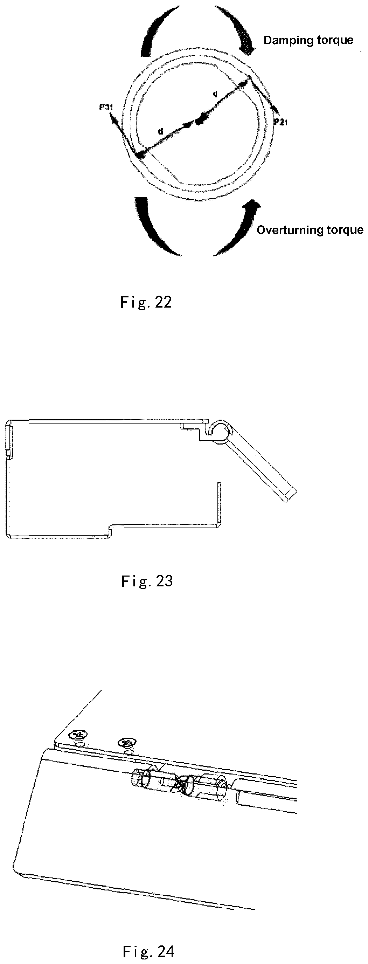

In conjunction with Figs. 21 and 22, the rotor is subjected to three forces, i.,e. a thrust F1 of the elastic member, and forces F2 and F3 applied by the stator to the rotor; F2 is decomposed into an axial force F22 and a tangential force F21, and F3 is decomposed into an axial force F32 and a tangential force F31, axial forces F22+F32>F1; the rotor moves right to compress the elastic member, which causes F1 to increase continuously, and at the same time, tangential forces F31 and F21 provide a damping torque, furthermore, the force value thereof is continuously decreased, the damping torque is continuously reduced, and the resistance feeling of a human hand is also continuously reduced.

In conjunction with Figs. 23, 24, 25 and 26, it can be determined that when the cover plate is opened to 45 degrees, convex points of the two cam surfaces are in contact with each other, and at this moment, the elastic member has the maximum compression amount and the maximum elastic force; since only the convex points are in contact with each other, it is very unstable, and the damping torque is also substantially 0; and if there is a slight upward or downward force, the electronic device will cross the convex points and return to a surface contact condition.

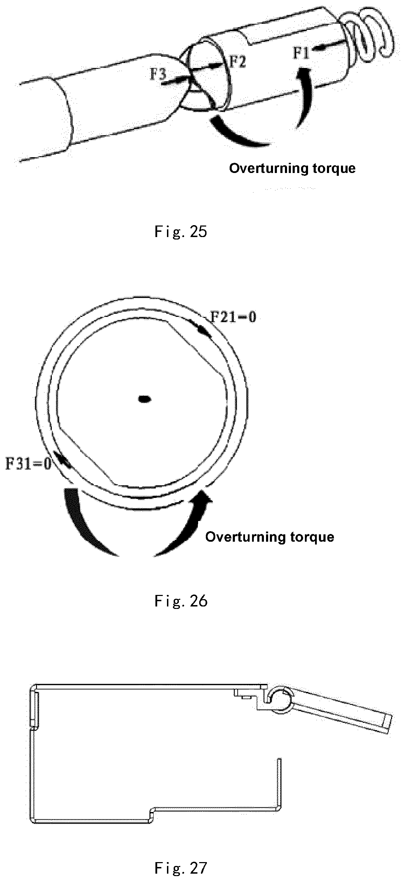

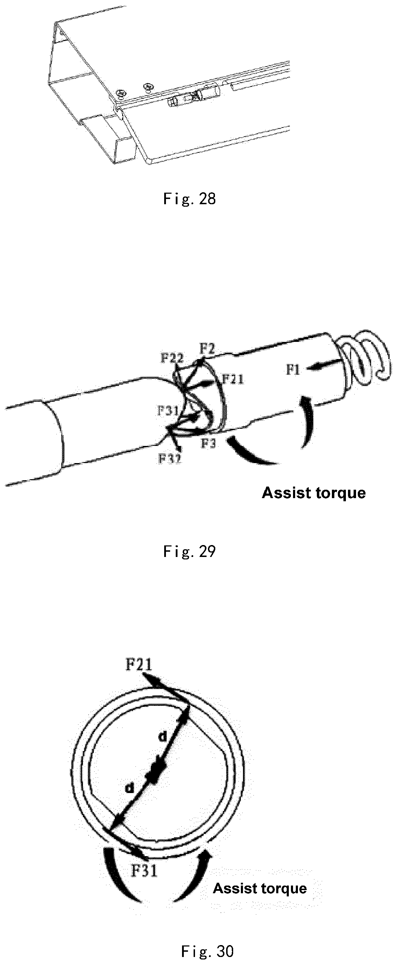

As shown in Figs. 27 and 28, the overturning angle of the cover plate is between 45-90 degrees. Taking 75 degrees as an example, the state of the cover plate, and the engagement state of the stator and the rotor are as follows:
in conjunction with Figs. 29 and 30, the rotor is subjected to three forces, i.e. the elastic force F1 of the elastic member, and forces F2 and F3 applied by the stator to the rotor, so that each of F2 and F3 are decomposed into an axial force and a radial (tangential) force; a resultant force of F21 +F31 is less than F1, the elastic member is elongated (but still in a compressed state); the radial forces F22 and F32 are converted into an assist torque, and the torque bounces off the cover plate, thereby producing an assist effect.

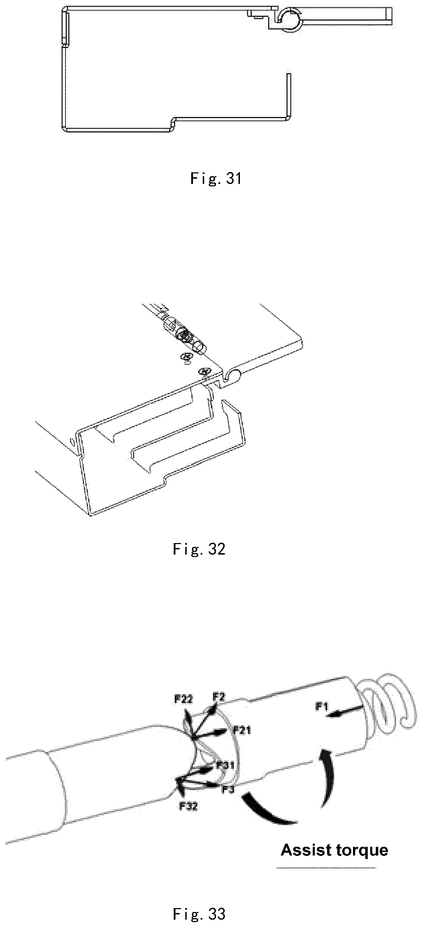

Figs. 31 and 32 show the state of the cover plate when opening to 90 degrees.

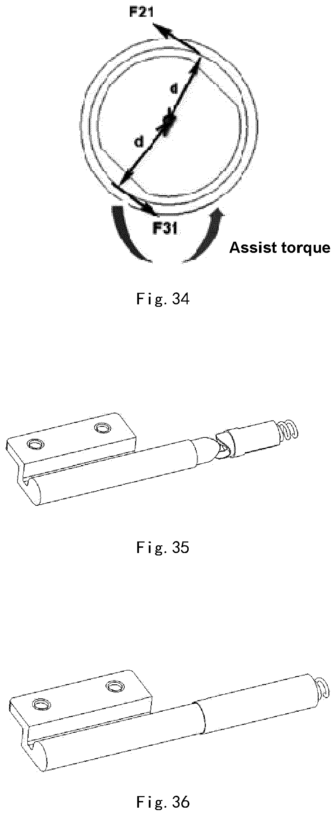

In conjunction with Figs. 33 and 34, at this time, the rotor 13 is subjected to three forces, i.e. the elastic force F1 of the elastic element 14, and forces F2 and F3 applied by the stator 12 to the rotor 13; each of F2 and F3 is decomposed into an axial force and a radial force; radial forces F21+F31 are balanced with F1, and tangential forces F22 and F32 generate an overturning torque to overcome a gravity torque of the cover plate; at the same time, the cover plate 15 is designed with a limiting structure, so that the cover plate cannot be overturned upwards continuously; and the cover plate 15 keeps still at a 90-degree opening state.

In one or more embodiments, as shown in Fig. 35, the stator base and the stator are integrally formed, and the rotor and the cover plate are integrally formed.

In one or more embodiments, as shown in Fig. 36, the stator, the rotor, and the elastic member are integrally formed, and then after integral forming, they are installed into the stator base and the cover plate.

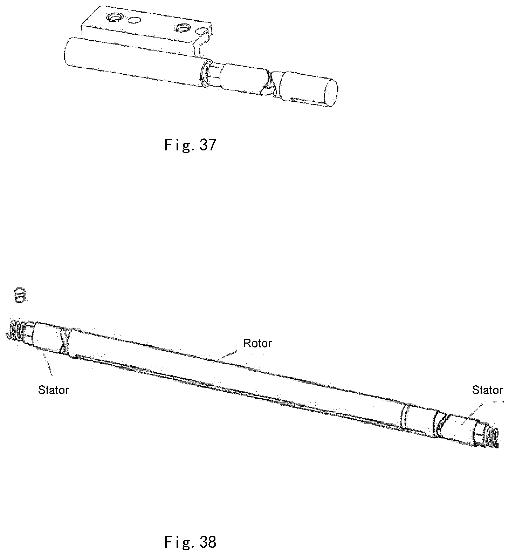

In one or more embodiments, as shown in Fig. 37, the structures of the stator and the rotor can be changed correspondingly, or changed to a structural form in which the elastic member is placed on the stator side and the stator only performs an axial movement, and the rotor is located on the cover plate side and the rotor only performs a rotary movement.

In one or more embodiments, as shown in Fig. 38, the rotors on the left and right sides are combined, meanwhile the elastic member is located on the stator side, and when the cover plate is rotated, the rotor (after combination) performs a rotary movement, and the stator performs an axial translation movement.

The rotating shaft structure is: at 0-45 degrees, the structure provides damping; and at 45-90 degrees, the structure provides an assist force. During closing, on the contrary, at 90-45 degrees, the structure provides damping; and at 45-0 degrees, the structure provides an assist force, returns to the original state, where force analysis is no longer repeated.

Different damping and assist effects can be achieved by improving the structure of the stator and the rotor in cooperation with the cam surfaces, including modifying the number of convex points on the curved cam surfaces, modifying the shape of the curved surfaces, and modifying the fixing manners of the stator and the rotor, and adjusting the structural form of the elastic member and the magnitude of the elastic force; however, these modifications are all within the scope of protection of the present disclosure.

From the description of the embodiments above, a person skilled in the art would have been able to clearly understand that the method in the embodiments above may be implemented by using software and necessary general hardware platforms, and of course may also be implemented using hardware, but in many cases, the former is a better embodiment. On the basis of such understanding, the portion of the technical solutions of the present disclosure that contributes in essence or contributes to the related art may be embodied in the form of a software product. The computer software product is stored in a storage medium (such as an ROM/RAM, a magnetic disk and an optical disc), and includes several instructions for enabling a terminal device (which may be a mobile phone, a computer, a server, or a network device, etc.) to execute the methods as described in various embodiments of the present disclosure.

It is apparent that a person skilled in the art shall understand that all of the modules or steps in the present disclosure may be implemented by using a general computing apparatus, may be centralized on a single computing apparatus or may be distributed on a network composed of multiple computing apparatuses. Optionally, they may be implemented by using executable program codes of the computing apparatuses. The modules or steps may be implemented by using executable program codes of the computing apparatus, and thus, the program codes may be stored in a storage apparatus and executed by the computing apparatus, and in some cases, the shown or described steps may be executed in a sequence different from that shown herein, or the modules or steps are manufactured into integrated circuit modules, or multiple modules or steps therein are manufactured into a single integrated circuit module for implementation. Thus, the present disclosure is not limited to any specific hardware and software combinations.

The content above merely relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A rotating shaft structure, comprising: a rotor, a stator and an elastic member;
a cam surface is provided on each of mating surfaces of both the rotor and the stator;
the elastic member is connected to an opposite end of the cam surface of the rotor; wherein in an overturning process of the rotor or the stator, the cam surfaces of the two constantly change contact positions so as to change an elastic force of the elastic member, so that the rotating shaft structure generates a damping torque or an assist torque; or
the elastic member is connected to an opposite end of the cam surface of the stator; wherein in an overturning process of the rotor or the stator, the cam surfaces of the two constantly change contact positions so as to change an elastic force of the elastic member, so that the rotating shaft structure generates a damping torque or an assist torque.

2. The rotating shaft structure according to claim 1, wherein comprising:
a first end of the rotor is connected to the elastic member;
a second end of the rotor is in rotational fit connection with a first end of the stator; wherein an end face of the second end of the rotor is a first cam surface, and an end face of a second end of the stator is a second cam surface, and the first cam surface matches the second cam surface.

3. The rotating shaft structure according to claim 1, wherein comprising:
a first end of the stator is connected to the elastic member;
a second end of the stator is in rotational fit connection with the first end of the stator; wherein
an end face of the second end of the stator is a first cam surface, and an end face of the second end of the stator is a second cam surface, and the first cam surface matches the second cam surface.

4. The rotating shaft structure according to claim 2, wherein the second end of the stator is connected to the elastic member.

5. The rotating shaft structure according to claim 3, wherein a second end of the rotor is connected to the elastic member.

6. The rotating shaft structure according to claim 2, wherein the second end of the stator is fixedly connected to the elastic member, and the stator is sleeved on the rotor by an external movable sleeve.

7. The rotating shaft structure according to claim 3, wherein the second end of the stator is fixedly connected to the elastic member, and the stator is sleeved on the rotor by an external movable sleeve.

8. The rotating shaft structure according to claim 1, wherein the number of the rotors is two and the number of the elastic members is two;
one end of each of the two rotors is in fit connection with two ends of the stator;
a cam surface is provided on each of three mating surfaces of the two rotors and the stator;
the two elastic members are respectively connected to opposite ends of the cam surfaces of the two rotors; wherein in an overturning process of the rotors or the stator, the cam surfaces of the three constantly change contact positions so as to change elastic forces of the elastic members, so that the rotating shaft structure generates a damping torque or an assist torque.

9. An electronic device, comprising:
a first body;
a second body; and
a rotating shaft structure, for connecting the first body and the second body;
wherein the rotating shaft structure comprises: a rotor, a stator and an elastic member;
a cam surface is provided on each of mating surfaces of both the rotor and the stator;
the elastic member is connected to an opposite end of the cam surface of the rotor; wherein in an overturning process of the rotor or the stator, the cam surfaces of the two constantly change contact positions so as to change an elastic force of the elastic member, so that the rotating shaft structure generates a damping torque or an assist torque; or
the elastic member is connected to an opposite end of the cam surface of the stator; wherein in an overturning process of the rotor or the stator, the cam surfaces of the two constantly change contact positions so as to change an elastic force of the elastic member, so that the rotating shaft structure generates a damping torque or an assist torque.

10. The electronic device according to claim 9, wherein
the first body is fixedly connected to the rotor, and the second body is fixedly connected to the stator; or
the first body is fixedly connected to the stator, and the second body is fixedly connected to the rotor.
